(19) Europäisches Patentamt
European Patent Office
Office européen des brevets

(11) Veröffentlichungsnummer: **0 243 975**
**A2**

(12) # EUROPÄISCHE PATENTANMELDUNG

(21) Anmeldenummer: 87106307.9

(22) Anmeldetag: 30.04.87

(51) Int.Cl.³: G 01 K 7/26

(30) Priorität: 30.04.86 DE 3614686

(43) Veröffentlichungstag der Anmeldung: 04.11.87 Patentblatt 87/45

(84) Benannte Vertragsstaaten: CH DE FR GB LI NL

(71) Anmelder: Max-Planck-Gesellschaft zur Förderung der Wissenschaften e.V.
Bunsenstrasse 10
D-3400 Göttingen(DE)

(72) Erfinder: Weppner, Werner
Weinbergweg 20 A
D-7000 Stuttgart 80(DE)

(74) Vertreter: Huber, Bernhard, Dipl.-Chem. et al,
Patentanwälte H. Weickmann, Dr. K. Fincke F.A. Weickmann, B. Huber Dr. H. Liska, Dr. J. Prechtel
Möhlstrasse 22 Postfach 860 820
D-8000 München 86(DE)

(54) **Elektrochemischer Temperatursensor.**

(57) Es wird ein Temperatursensor zur elektrochemischen Temperaturmessung beschrieben, der als temperaturabhängiges Element eine galvanische Kette aus zwei ungleichen Elektroden und einem Elektrolyten enthält, und eine Meßeinrichtung zur Messung der temperaturabhängigen EMK dieser Kette. Vorzugsweise ist die galvanische Kette eine galvanische Festkörperkette. Durch die Verwendung einer galvanischen Kette, deren Zellspannung unabhängig von der Größe und der Geometrie der galvanischen Kette ist, als temperaturabhängiges Element und durch den einfachen Aufbau lassen sich derartige Temperatursensoren unter Beibehaltung ihrer vollen Leistungsfähigkeit leicht in miniaturisierter Form anwenden, und liefern ein direktes elektrisches Signal mit einer hohen Temperaturempfindlichkeit.

FIG.1

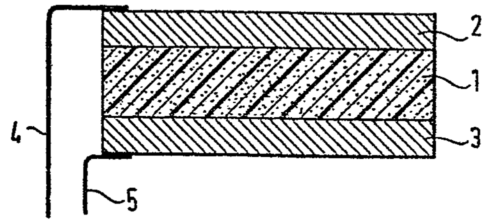


EP 0 243 975 A2

Croydon Printing Company Ltd.

0243975

## Beschreibung

## Elektrochemischer Temperatursensor

Die Erfindung betrifft ein Temperaturmeßgerät (Temperatursensor) zur elektrochemischen Temperaturmessung.

Zur Messung der Temperatur, der in Wissenschaft und Technik eine äußerst große Bedeutung zukommt, sind eine Reihe von Verfahren bekannt. Dabei sind, insbesondere im Hinblick auf eine Miniaturisierung der Sensoren und eine direkte Verwertbarkeit der erhaltenen Signale, z.B. für Steuer- und Regelungszwecke oder in der Robotik, solche Verfahren von besonderem Interesse, die ein elektrisches Signal anzeigen. Zur Zeit werden hierfür überwiegend Thermoelemente eingesetzt; der Temperaturmessung mittels Thermoelementen liegt der temperaturabhängige Potentialsprung zwischen zwei verschiedenen metallischen Leitern zugrunde. Ein wesentlicher Nachteil dieses Verfahrens besteht in dem sehr geringen Pegel des Meßsignals, z.B. von nur 0,01mV/°K für das System Pt/PtRh (10%), oder von 0,04mV/°K für das System NiCr/Ni, sowie in der Notwendigkeit eines Referenzpunktes, z.B. von Eiswasser oder temperaturabhängiger Widerstände, und der Notwendigkeit der Ausführung der Ableitung aus verschiedenen metallischen Leitern. Insbesondere letzteres führt zu Schwierigkeiten bei der Herstellung von Durchführungen, z.B. durch Behälterwände, wenn darüber Temperaturgradienten vorliegen und aus technischen Gründen zur Durchführung auf andere Materialien mit entsprechenden zusätzlichen Thermospannungen übergegangen werden muß. Da die Thermospannung auch stark von der genauen chemischen Zusammensetzung der Thermoelemente abhängig ist, ist es für Präzisionsmessungen in jedem Fall erforderlich, Eichmessungen durchzuführen. Thermoelemente sind außerdem im Hinblick auf die zu messende Temperatur in ihrer Anwendung eingeschränkt, und die Änderung der Spannung mit der Temperatur ist nicht linear (wodurch komplizierte numerische Approximationen notwendig sind).

Aus der DE-OS 27 50 049 ist ein Hochtemperatur-Meß-, Steuer- oder Regelkreis mit einem der hohen Temperatur ausgesetzten Schaltglied bekannt, bei dem das Schaltglied ein Festelektrolyt ist, dessen Temepraturabhängigkeit der Leitfähigkeit zur Messung, Steuerung oder Regelung der Temperatur herangezogen wird.

Ionische Leitfähigkeiten hängen jedoch - ähnlich wie elektronische Leitfähigkeit in Halbleitern - meist empfindlich von Verunreinigungen (Dotierungen), Herstellungsverfahren und Widerständen an Korngrenzen und Elektroden ab.

W.T. Lindsay und R.J. Ruka, Electrochemica Acta 13 (1968) 1867 beschreiben eine Hochtemperatur-Sauerstoffkonzentrationszelle mit festem Elektrolyt, welche dazu dienen soll, hohe Fixpunkttemperaturen, wie Schmelzpunkte von Silber, Gold und Palladium, in der thermodynamischen Temperaturskala zu bestimmen. Zu beiden Seiten des Festelektrolyten werden Gase mit Sauerstoffpartialdrucken, die unabhängig von der Temperatur auf verschiedenen Werten konstant gehalten werden, vorgegeben. Es wird davon Gebrauch gemacht, daß in der Nernst'schen Gleichung die absolute Temperatur T auftritt

$$E = \frac{RT}{4F} \ln \frac{PO_2'}{PO_2''}$$

(R = absolute Gaskonstante, F = Faradaykonstante, $Po_2'$ und $Po_2''$ = Sauerstoffpartialdrucke zu beiden Seiten des Festelektrolyten). Von einer Temperaturabhängikeit der logarithmischen Größe wird kein Gebrauch gemacht. Im Gegenteil, die verschiedenen Partialdrucke müssen außerordentlich stabil gehalten werden. Ein derartiger Temperatursensor erfordert die Verwendung voluminöser, kompliziert aufgebauter und damit auch sehr störungsanfälliger Gaselektroden, die keine Miniaturisierung des Meßgerätes ermöglichen. Ein weiterer Nachteil ist die sehr geringe Empfindlichkeit; die Änderung der Spannung mit der Temperatur beträgt nur ca. 0,03mV/°K.

Aufgabe der vorliegenden Erfindung ist die Bereitstellung eines Temperatursensors, mit dem die vorstehend beschriebenen, insbesondere im Zusammenhang mit der Verwendung von Thermoelementen auftretenden Nachteile vermieden werden können, und der auch in miniaturisierter Form, d.h. also in kleinen und kleinsten Abmessungen technisch einfach herstellbar ist und gute Ergebnisse zeigt. Diese Aufgabe wird mit der vorliegenden Erfindung gelöst.

Gegenstand der Erfindung ist ein Temepratursensor zur elektrochemischen Temperaturmessung, der dadurch gekennzeichnet ist, daß er als temperaturabhängiges Element eine galvanische Kette aus zwei ungleichen Elektroden und einem Elektrolyten enthält, und eine Meßeinrichtung zur Messung der temperaturabhängigen EMK dieser Kette.

Zweckmäßige Ausgestaltungen dieses Temperatursensors sind den Ansprüchen 2 bis 15 zu entnehmen.

Durch die Verwendung einer galvanischen Kette als temperaturabhängiges Element sind die erfindungsgemäßen Temperatursensoren bei Erhaltung ihrer vollen Leistungsfähigkeit und Einsetzbarkeit grundsätzlich miniaturisierbar, weil die EMK (Zellspannung) unabhängig von der Größe und der Geometrie der galvanischen Kette (Zelle) ist. Die Ableitungen der auf der zu bestimmenden Temperatur befindlichen galvanischen Kette zur Meßeinrichtung, die vorzugsweise ein elektrischer Spannungsmesser, z.B. ein Voltmeter oder Elektrometer ist, bestehen typischerweise aus dem gleichen Material. Aber selbst wenn durch die Verwendung verschiedener Materialien in den Zuleitungen Thermospannungen entstehen sollten, sind diese gegenüber der Spannung der galvanischen Zelle im allgemeinen vernachlässigbar klein und brauchen daher in den meisten Fällen nicht berücksichtigt zu werden. Nachdem für ein bestimmtes Elektroden/Elektrolyt-System Eichmessungen durchgeführt wurden, sind weitere Eichungen der einzelnen Zellen in der Regel nicht mehr erforderlich, weil die in einer galvanischen Zelle erzeugte Spannung im allgemeinen wesentlich weniger als die Thermospannung von Materialeigenschaften abhängt, und der Einfluß von Materialeigenschaften, wie z.B. von Verunreinigungen, deshalb praktisch vernachlässigbar ist.

Obwohl sich auch flüssige Elektrolyte und/oder Elektroden eignen, werden aus praktischen Gründen, insbesondere auch im Hinblick auf eine Miniaturisierung, als Elektrolyt feste Elektrolyte und/oder als Elektroden feste oder teilweise feste Elektroden bevorzugt eingesetzt. Die galvanische Kette ist deshalb vorzugsweise eine galvanische Festkörperkette.

In einer besonders bevorzugten Ausführungsform des erfindungsgemäßen Temperatursensors wird als temperaturabhängiges Element eine galvanische Kette eingesetzt, bei der ein fester Elektrolyt mit zwei ungleichen Elektroden kontaktiert ist, die bei jeder vorgegebenen Temperatur und vorgegebenem Gesamtdruck genau definierte chemische Potentiale der im Elektrolyten überführten Ionensorte aufweisen, deren chemische Potentiale also bei vorgegebener Temperatur und vorgegebenem Druck im wesentlichen unabhängig von ihrer Zusammensetzung sind. Eine solche Bedingung ist zum Beispiel erfüllt, wenn in einer Elektrode nach der Gibbs'schen Phasenregel beim Vorhandensein von n aktiven Komponenten, die an der Einstellung des chemischen Potentials beteiligt sind, n Phasen im thermodynamischen Gleichgewicht vorliegen. n ist dabei vorzugsweise eine ganze Zahl von 1 bis 5, und insbesondere von 1 bis 3. Die Elektrode kann zum Beispiel allein aus der Komponente, die im Elektrolyten überführt werden kann, z.B. aus Kupfer, aus einer 2-Phasen-Mischung mit zwei Komponenten, z.B. $CuO/Cu_2O$, aus einer 3-Phasen-Mischung mit drei Komponenten, z.B. $GeO_2/Cu_2O/CuGeO_3$, usw. bestehen. Zusätzlich können Verunreinigungen und weitere Komponenten enthalten sein, die als inaktive chemische Spezies nicht mit Nachbarphasen austauschen und daher an der Einstellung des chemischen Potentials nicht beteiligt sind. Vorzugsweise wird eine Kombination von Elektroden mit möglichst unterschiedlicher Temperaturabhängigkeit der chemischen Potentiale der überführten Komponenten verwendet.

Für die sich zwischen den beiden Elektroden einstellende Spannung E gilt bei einer Überführung von z-fach geladenen Ionen der Sorte A die Beziehung:

$$E(T) = \frac{1}{zq} [\mu_A'(T) - \mu_A''(T)]$$

' und " stehen für die beiden verschiedenen Elektroden; q ist die Elementarladung (wenn das chemische Potential auf ein Teilchen bezogen ist) bzw. die Faraday-Konstante (wenn das chemische Potential auf ein Mol bezogen ist). Das chemische Potential $\mu$ der überführten Komponente steht mit der Änderung der Gibbs-Energie $\Delta G$ beim (virtuellen) Durchgang von 1 Ion bzw. 1 Mol Ionen $A^{z+}$ in folgender Beziehung:

$$E(T) = \frac{1}{zq} \Delta G(T)$$

d.h., die beim Ablauf der Zellreaktion freiwerdende oder benötigte chemische Energie ist zu der gewonnenen oder benötigten elektrischen Energie äquivalent. Da die Änderung der Gibbs-Energie der Zellreaktion im allgemeinen temperaturabhängig ist, ist die Zellspannung somit eine Funktion der Temperatur.

Durch die erfindungsgemäße Verwendung einer galvanischen Kette kann die Temperaturmessung also auf wohl definierte und reproduzierbare thermodynamische Daten zurückgeführt werden. Zur Bestimmung des Zusammenhangs zwischen der zum Beispiel mit einem Spannungsmeßgerät meßbaren Zellspannung und der Temperatur kann deshalb auf thermodynamische Daten zurückgegriffen werden, wenn diese hinreichend genau bekannt sind, oder es wird für ein spezifisches System eine Eichmessung durchgeführt, die dann für alle aus diesem System aufgebauten Zellen gelten kann. Die Änderung der Zellspannung pro Temperatureinheit hängt vom gewählten Elektrodenpaar ab, insbesondere von den Bildungsenthalpien der in den Elektroden vorhandenen chemischen Verbindungen. Um eine möglichst hohe Empfindlichkeit zu erreichen, werden deshalb Elektroden mit möglichst unterschiedlichen Bildungsenthalpien bevorzugt benutzt. Da die Bildungsenthalpien über weite Temperaturbereiche im wesentlichen konstant sind, sind die Änderungen der Zellspannung mit der Temperatur mit guter Genauigkeit linear. Je nach dem verwendeten System können jedoch auch Änderungen eintreten, insbesondere dann, wenn in einer der Elektroden mit der Änderung der Temperatur eine Phasenumwandlung auftritt, oder sich neue Phasengleichgewichte einstellen. In einem solchen Fall setzt sich die Temperaturabhängigkeit der Zellspannung dann aus zwei Kurven zusammen, von denen jede mit guter Genauigkeit eine Gerade ist. Komplizierte Beschreibungen der Kurvenform des Meßsignals als Funktion der Temperatur, wie dies bei Thermoelementen der Fall ist, können bei erfindungsgemäßen Temperatursensoren deshalb entfallen.

Als Elektrolyte und Elektroden können in der Regel alle unter den jeweiligen Anwendungsbedingungen (zu messender Temperaturbereich, Druck, Größe und Ausgestaltung der Temperatursensoren usw.) geeigneten Elektrolyte und Elektroden verwendet werden. Für den Elektrolyten ist es lediglich notwendig, daß er überwiegend ionisch leitend ist, wobei die Größe der Leitfähigkeit ohne Bedeutung ist, sobald ein Mindestwert überschritten ist, der vom Eingangswiderstand des Spannungsmeßgerätes abhängt. Als feste Elektrolyte kommen z.B. insbesondere in Frage: für höchste Temperaturen Keramiken auf Korundbasis und kubisch stabilisiertes $ZrO_2$ als $O^{--}$-Ionenleiter; für den Bereich zwischen Raumtemperatur und mehreren 100°C Silber-Ionenleiter, wie z.B. $Ag_4RbJ_5$ oder $\alpha$-AgJ, Kupferionenleiter, wie z.B. Kupferhalogenide, Lithiumionenleiter, z.B. eine Vielzahl von Lithiumverbindungen, insbesondere Lithiumnitridhalogenide oder $Li_4SiO_4/Li_3PO_4$, Natriumionenleiter, z.B. NASICON, ß-$Al_2O_3$ als Ionenleiter für eine Vielzahl einwertiger Ionen, und ß"-$Al_2O_3$ für 2-fach geladene Ionen, z.B. $Pb^{++}$. Flüssige Elektrolyte sind z.B. geschmolzene Salze.

Beispiele für in Systemen der galvanischen Ketten bevorzugt verwendete Elektrolyte und Elektroden und deren Kombinationen sind:

kubisch stabilisiertes $ZrO_2$ als Elektrolyt mit den Elektroden Ni/NiO und $Fe_2O_3/Fe_3O_4$; Co/CoO und $Fe_3O_4/Fe_2O_3$; Co/CoO und Ni/NiO; ein Kupferionenleiter als Elektrolyt mit den Elektroden Kupfer und $CuO/Cu_2O$, Kupfer und $CuS/Cu_2S$; Natrium-ß-$Al_2O_3$ als Elektrolyt mit NaS-Elektroden, z.B. mit $Na_2S$/NaS und $Na_2S_3/NaS_2$; Blei-ß"-$Al_2O_3$ als Elektrolyt mit den Elektroden Blei und $PbO/Pb_3O_4$.

Da die Zellspannung einer galvanischen Kette unabhängig von ihren Dimensionen ist, läßt sich mit den erfindungsgemäßen Temperatursensoren eine Miniaturisierung erreichen, die im wesentlichen nur durch praktische und technische Ausgestaltungsmöglichkeiten begrenzt ist. Zum Aufbau kleiner erfindungsgemäßer Temperatursensoren können z.B. an sich bekannte Dünnschicht- und Dickschicht-Techniken Verwendung finden, mit denen z.B. Elektrolyt- und/oder Elektroden-Beschichtungen aufeinander oder auf ein Substrat aufgebracht werden können. In einer erfindungsgemäßen Ausführungsform sind die Elektroden z.B. an verschiedenen Oberflächenseiten des Elektrolyten angeordnet, in einer anderen Ausführungsform an der gleichen Oberflächenseite. Vorzugsweise wird der Elektrolyt als mechanisch tragendes Element ausgebildet, Elektrolyt und Elektroden können sich aber auch auf einem isolierten oder elektrisch leitenden Substrat als mechanisch tragendes Element befinden, z.B. auf einem Saphir-Substrat. Zur Herstellung miniaturisierter Ausführungsformen der Erfindung können die Herstellungsmethoden der Mikroelektronik angewendet werden. So hergestellte Temperatursensoren können in mikroelektronischen Schaltungen integriert sein.

Vorzugsweise, und insbesondere für den Fall, daß Elektroden und/oder Elektrolyt gegenüber der bei der Anwendung vorgesehenen Umgebung nich inert sind, ist es zweckmäßig, die galvanische Kette oder zumindest einzelne ihrer Bestandteile, wie Elektrolyt und/oder Elektroden, mit einem Schutzüberzug zu versehen, insbesondere mit einem isolierenden oder gasdichten Überzug. Dazu kann die galvanische Kette z.B. in eine Glasperle eingeschmolzen werden, oder es wird ein Schutzüberzug aufgebracht, z.B. durch Aufdampfen oder Sputtern. Als Ableitungen zum Spannungsmeßgerät können in der Regel Leiter beliebiger Art verwendet werden.

Die Figuren 1 bis 6 zeigen im Querschnitt eine schematische Darstellung verschiedener erfindungsgemäßer Anordnungen von Elektrolyt (1), Elektroden (2,3) und Ableitungen (4,5).

In Figur 1 sind die Elektroden auf gegenüberliegenden Seiten des Elektrolyten angeordnet, in Figur 2 befinden sich die Elektroden auf der gleichen Seite des Elektrolyten, wobei der Elektrolyt (Festkörperelektrolyt) als mechanisch tragendes Element ausgebildet ist.

In den Figuren 3 und 4 befinden sich Elektrolyt und Elektroden auf einem Substrat (6) als tragendes Element, wobei Figur 3 eine Anordnung der Elektroden auf entgegengesetzten Seiten des Elektrolyten zeigt, und Figur 4 eine Anordnung der Elektroden auf der gleichen Seite des Elektrolyten.

Figur 5 zeigt eine Anordnung, bei der die galvanische Kette in eine Perle aus Glas oder ein anderes geeignetes gasdichtes Material (7) eingeschmolzen ist. Die Figuren 6a, b und c zeigen Ausführungsformen mit einer Schutzschicht, z.B. aus $Al_2O_3$, wie sie durch Aufdampfen oder Sputtern aufgebracht werden kann.

Mit dem erfindungsgemäßen Temperatursensor wird ein Temperaturmeßgerät bereitgestellt, das ein direktes elektrisches Signal mit hoher Temperaturempfindlichkeit liefert; Vergleichselemente mit einer definierten Referenztemperatur sind nicht erforderlich. Aufgrund der großen Zahl geeigneter Ionenleiter und Elektroden und deren Kombinationen steht eine breite Paletten von Elektrolyt-Elektroden-Systemen zur Verfügung, wodurch es möglich ist, das für das jeweilige Anwendungsgebiet zweckmäßigste System auszuwählen; die Wahl des zweckmäßigsten Systems hängt dabei von der jeweiligen Meßaufgabe ab, und insbesondere vom Temperaturbereich. Durch die Verwendung hochschmelzender Keramiken als Elektrolyte und Elektroden eignen sich die erfindungsgemäßen Temperatursensoren auch zur Messung sehr hoher Temperaturen. Ein weiterer Vorteil der erfindungsgemäßen Temperatursensoren ist auch der gegenüber Thermoelementen in der Regel wesentlich einfachere konstruktive Aufbau, der für den jeweiligen Verwendungszweck optimal angepaßte Ausgestaltugnen ermöglicht.

Erfindungsgemäße Temperatursensoren, bei denen bei einer bestimmten Temperatur eine starke Änderung der EMK auftritt, können aber auch zur Eichung konventioneller Thermoelemente herangezogen werden; dies tritt vor allem bei solchen Temperatursensoren auf, bei denen sich das Phasendiagramm ändert, sich also zum Beispiel neue Phasen bilden oder die Phasen in anderer Weise miteinander im Gleichgewicht stehen. Wird zum Beispiel die Konzentration der Komponenten so gewählt, daß oberhalb 1010°C eine Mischung der Phasen $Fe_{1-y}O$/$YFe_2O_{4-x}$/$YFeO_3$ vorliegt, verändert sich der Logarithmus des Sauerstoffpartialdrucks mit der reziproken absoluten Temperatur; unterhalb 1010°C ist die Phase $YFe_2O_{4-x}$ nicht mehr stabil. Es stellt sich dann ein Gleichgewicht der Phasen Fe/$YFeO_3$/$Fe_{1-y}O$ ein. Die Temperaturabhängigkeit des Logarithmus des Sauerstoffpartialdrucks dieser 3-Phasen-Mischung ist deutlich verschieden von dem Wert bei höherer Temperatur. In der Änderung des Logarithmus des Sauerstoffpartialdrucks tritt deshalb bei 1010°C ein deutlicher Knick ein (vgl. W. Piekarczyk, W. Weppner und A. Rabenau, Zeitschrift Naturforschung 34A (1979) 430). Wird mit Hilfe eines sauerstoffionen-leitenden Elektrolyten der Sauerstoffpartialdruck gemessen, ergibt sich bei 1010°C eine deutlich sichtbare Änderung der Temperaturabhängigkeit der EMK. Dieser Knickpunkt kann zur Kontrolle der Temperatur oder zur Eichung herangezogen werden.

Nachfolgend werden beispielhaft eine Reihe von Systemen genannt, und die Temperaturabhängigkeit der EMK dieser Systeme wird in den Figuren 7 bis 14 dargestellt:

Figur 7 zeigt die gemessene Abhängigkeit der Zellspannung von der absoluten Temperatur einer galvanischen Festkörperkette mit kubisch stabilisiertem $ZrO_2$ als $O^{--}$-Ionenleiter mit Gemengen aus Ni/NiO sowie $Fe_2O_3$/$Fe_3O_4$ als Elektroden. Die Temperaturabhängigkeit der Spannung beträgt 0,245mV/°K. Sie ist damit wesentlich höher als für Thermoelemente.

Die Figuren 8 bis 14 beziehen sich auf die aus den thermodynamischen Daten der verwendeten Systeme ermittelte Temperaturabhängigkeit der EMK: die Figuren 8 und 9 zeigen für den gleichen, für Figur 7 verwendeten Elektrolyten die Temperaturabhängigkeiten mit Co/CoO- und $Fe_3O_4/Fe_2O_3$- (Figur 8) sowie für Co/CoO- und Ni/NiO-Elektroden (Figur 9). Die Änderung der Spannung mit der Temperatur hat für die erstere Elektrodenkombination den außerordentlich hohen Wert von 0,319mV/°K, für die letztgenannte Elektrodenkombination beträgt die Änderung 0,073mV/°K.

Für die Anwendung eines Kupferionenleiters mit Kupfer und $CuO/Cu_2O$-Elektroden ergibt sich aufgrund der Bildung von CuO und $Cu_2O$ der in Figur 10 dargestellte Verlauf. Die Temperaturabhängigkeit der Spannung beträgt 0,16mV/°K.

In Figur 11 befindet sich ein Kupferionenleiter zwischen elementarem Kupfer und einer Elektrode aus $CuS/Cu_2S$. Es ergibt sich hierbei die außerordentlich hohe Temperaturempfindlichkeit der Zellspannung von 0,389mV/°K.

Statt des elementaren Kupfers läßt sich unter Beibehaltung der $CuS/Cu_2S$-Elektrode zum Beispiel auch eine $CuO/Cu_2O$-Gegenelektrode verwenden; hierbei ergibt sich der in Figur 12 dargestellte Temperaturverlauf der Spannung. Die Steilheit beträgt 0,229mV/°K.

Unter Verwendung des Natriumionenleiters Na-ß-$Al_2O_3$ ergibt sich für die Gleichgewichte verschiedener Natriumsulfide ($Na_2S$/NaS und $Na_2S_3/NaS_2$) die in Figur 13 dargestellte Temperaturabhängigkeit der Zellspannung E; die Empfindlichkeit beträgt in diesem Fall sogar 1,172mV/°K.

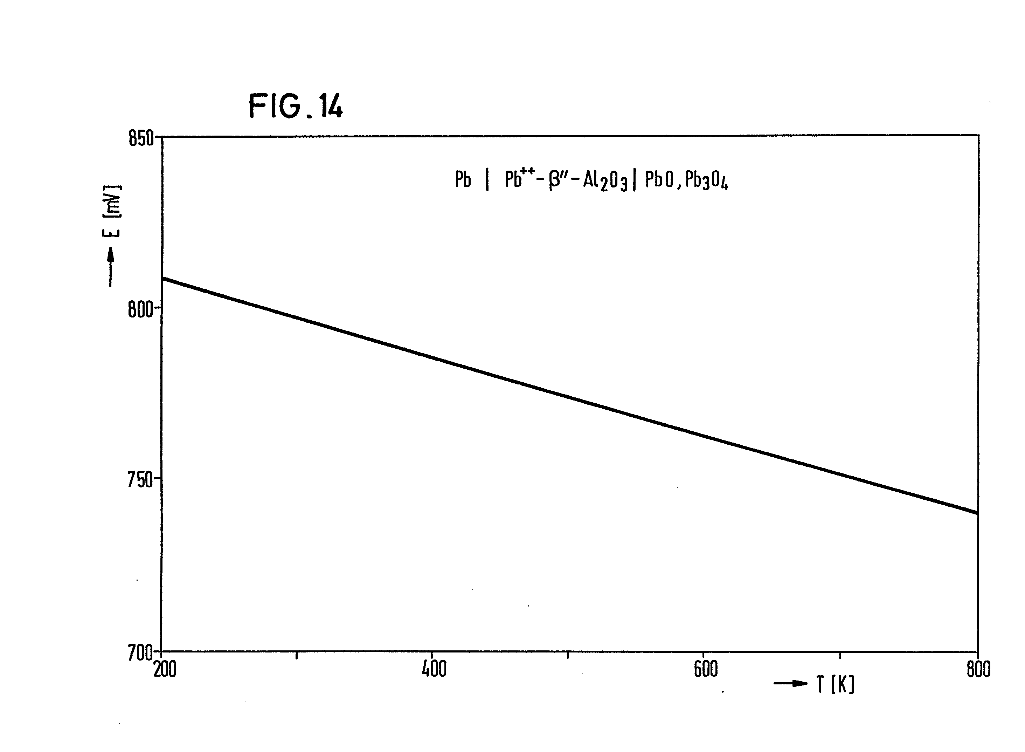

In Figur 14 ist der Zusammenhang zwischen der Zellspannung und der Temperatur unter Verwendung eines Bleiionenleiters $Pb^{++}$-ß"-$Al_2O_3$ mit einer Elektrode aus elementarem Blei und einer Mischung aus $PbO/Pb_3O_4$ dargestellt. Der Temperaturkoeffizient der Zellspannung beträgt in diesem Fall 0,115mV/°K.

0243975

Eine experimentelle Messung der Temperaturabhängigkeit der EMK kann zwar zu etwas abweichenden Ergebnissen im Hinblick auf die Steilheit (Temperaturempfindlichkeit) der in den Figuren 8 bis 14 dargestellten Geraden führen, ändert aber nichts an der grundsätzlichen Anwendbarkeit dieser Systeme.

PATENTANWÄLTE DIPL.-ING. H. WEICKMANN, DIPL.-PHYS. T.
DIPL.-ING. F. A. WEICKMANN, DIPL.-CHE
DR.-ING. H. LISKA, DIPL.-PHYS. DR. J

0243975



HSMSI
GI 982

8000 MÜNCHEN 86
POSTFACH 860 820
MÜHLSTRASSE 22
TELEFON (0 89) 98 03 52
TELEX 5 22 621
TELEGRAMM PATENTWEICKMANN MÜNCHEN

Max-Planck-Gesellschaft zur Förderung der Wissenschaften e.V.
Bunsenstr. 10 3400 Göttingen

Elektrochemischer Temperatursensor

## Patentansprüche

1. Temperatursensor zur elektrochemischen Temperaturmessung, dadurch gekennzeichnet, daß er als temperaturabhängiges Element eine galvanische Kette aus zwei ungleichen Elektroden und einem Elektrolyten enthält, und eine Meßeinrichtung zur Messung der temperaturabhängigen EMK dieser Kette.

2. Temperatursensor nach Anspruch 1, dadurch gekennzeichnet, daß als Elektrolyt ein fester Elektrolyt und als Elektroden feste oder teilweise feste Elektroden verwendet werden.

3. Temperatursensor nach Anspruch 2, dadurch gekennzeichnet, daß der feste Elektrolyt mit zwei ungleichen Elektroden kontaktiert ist, deren chemische Potentiale bei vorgegebener Temperatur und vorgegebenem Druck im wesentlichen unabhängig von ihrer Zusammensetzung sind.

4. Temperatursensor nach Anspruch 3, dadurch gekennzeichnet, daß bei Elektroden, die aus n aktiven Komponenten, die an der Einstellung des chemischen Potentials beteiligt sind, bestehen, n Phasen im thermodynamischen Gleichgewicht vorliegen.

5. Temperatursensor nach Anspruch 4, dadurch gekennzeichnet, daß n = 1 bis 5, insbesondere 1 bis 3, ist.

6. Temperatursensor nach einem der vorhergehenden Ansprüche, dadurch gekennzeichnet, daß die galvanische Kette eine galvanische Festkörperkette ist.

7. Temperatursensor nach einem der vorhergehenden Ansprüche, dadurch gekennzeichnet, daß die Meßeinrichtung ein elektrischer Spannungsmesser ist.

8. Temperatursensor nach einem der Ansprüche 2 bis 7, dadurch gekennzeichnet, daß die Elektroden an verschiedenen Oberflächenseiten des Elektrolyten angeordnet sind.

9. Temperatursensor nach einem der Ansprüche 2 bis 7, dadurch gekennzeichnet, daß die Elektroden an der gleichen Oberflächenseite des Elektrolyten angeordnet sind.

10. Temperatursensor nach Anspruch 8 oder 9, dadurch gekennzeichnet, daß der Elektrolyt als tragendes Element ausgestaltet ist.

11. Temperatursensor nach Anspruch 8 oder 9, dadurch gekennzeichnet, daß Elektrolyt und Elektroden auf einem Substrat als tragendem Element angeordnet sind.

12. Temperatursensor nach einem der Ansprüche 8 bis 11, dadurch gekennzeichnet, daß Elektrolyt und/oder Elektroden in Form von mittels Dickschicht- oder Dünnschicht-Techniken aufgetragenen Schichten vorliegen.

13. Temperatursensor nach einem der Ansprüche 8 bis 12, dadurch gekennzeichnet, daß die galvanische Kette mit einem Schutzüberzug überzogen ist.

14. Temperatursensor nach Anspruch 13, dadurch g e k e n n - z e i c h n e t, daß der Schutzüberzug ein isolierender oder gasdichter Überzug ist.

15. Temperatursensor nach Anspruch 14, dadurch g e k e n n - z e i c h n e t, daß die glavanische Zelle in eine Glasperle eingeschmolzen ist.

16. Temperatursensor nach Anspruch 12, dadurch g e k e n n-- z e i c h n e t, daß er in miniaturisierter Form, nach den Methoden der Mikroelektronik hergestellt, vorliegt.

17. Temperatursensor nach Anspruch 16, dadurch g e k e n n - z e i c h n e t, daß er in eine mikroelektronische Schaltung integriert ist.

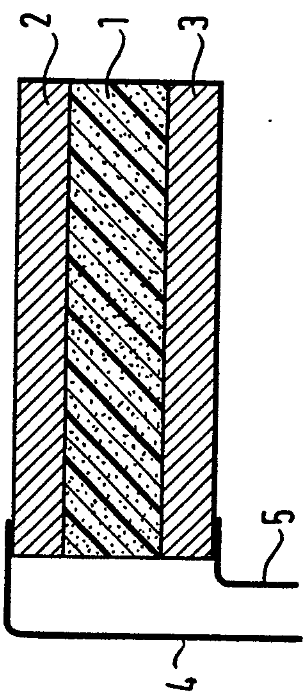


FIG.1

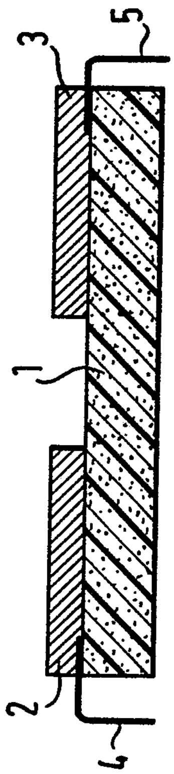


FIG.2

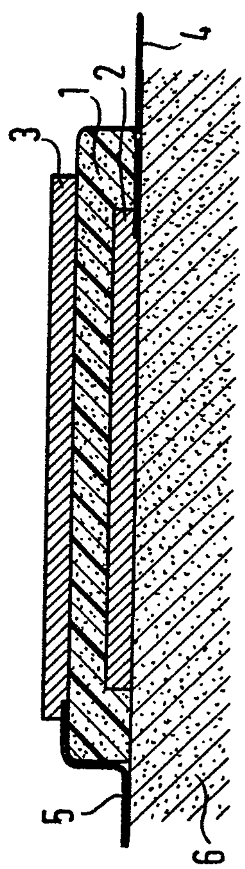


FIG.3

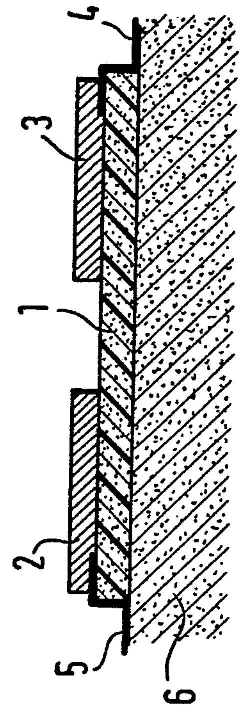


FIG.4

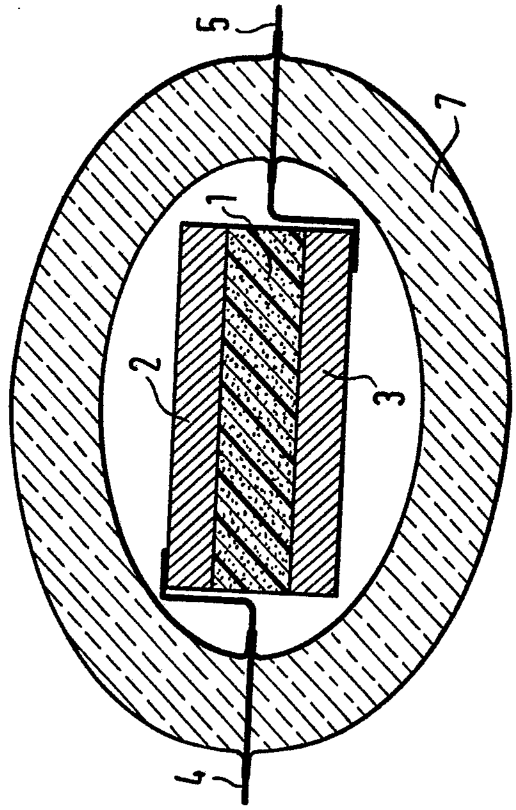


FIG. 5

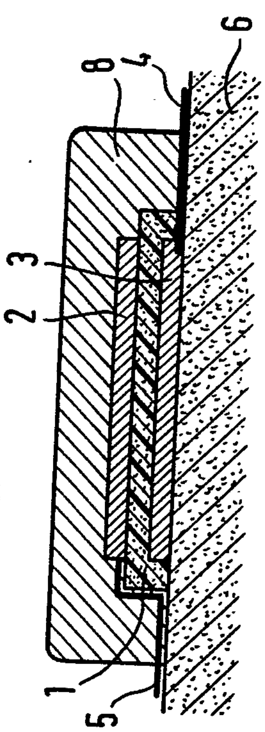


FIG.6a

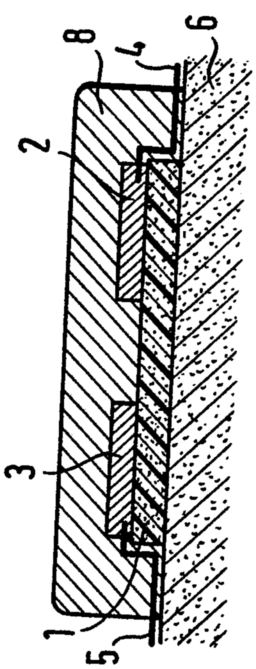


FIG.6b

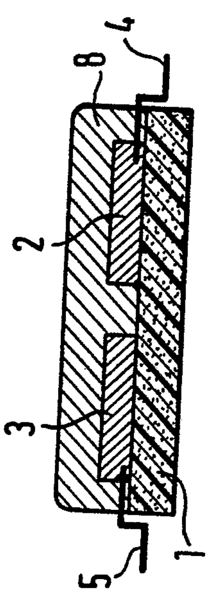


FIG.6c

FIG. 7

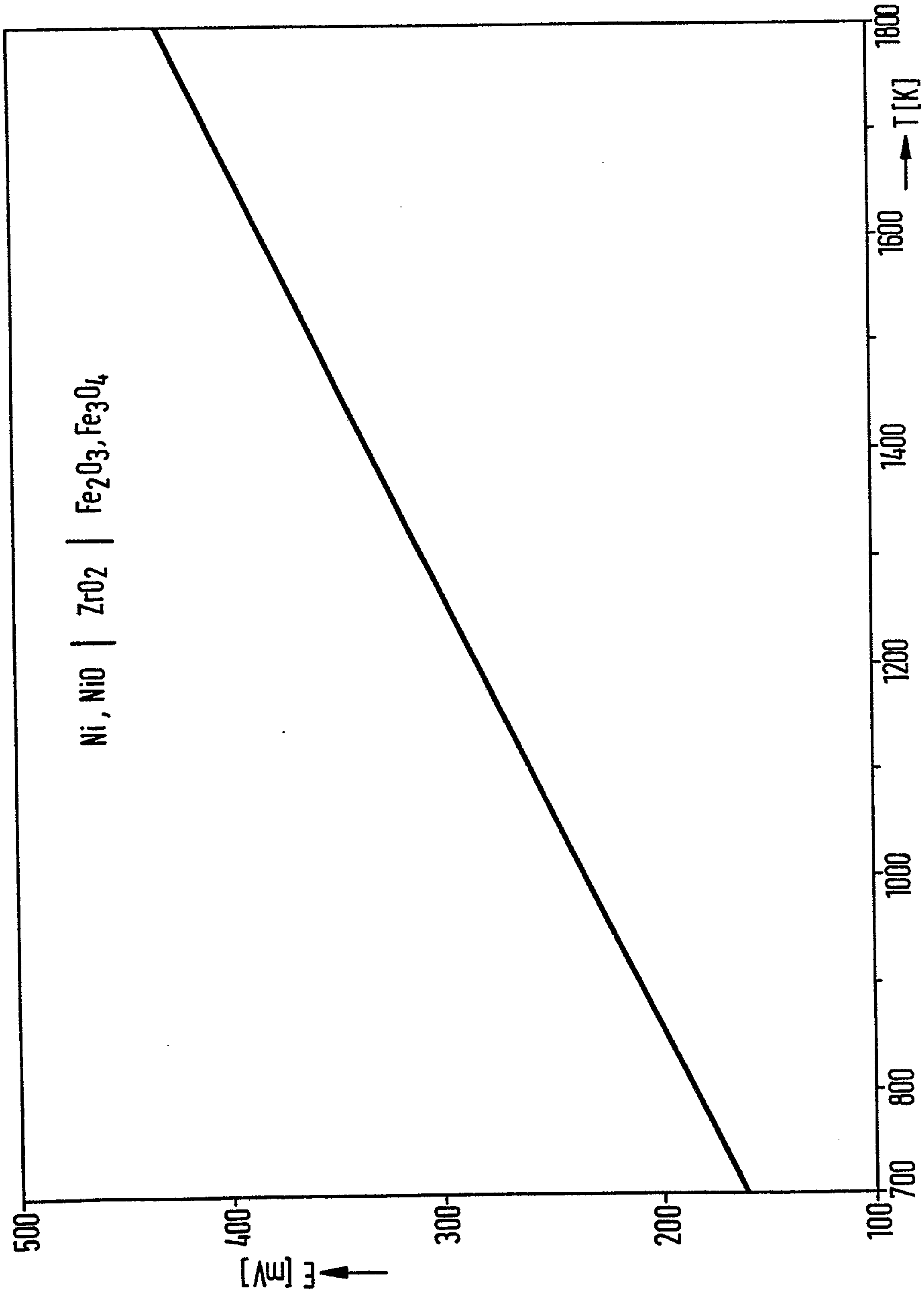
Ni , NiO | ZrO2 | Fe2O3, Fe3O4
E [mV]
500
400
300
200
100
700
800
1000
1200
1400
1600
1800
T [K]

0243975

FIG.8

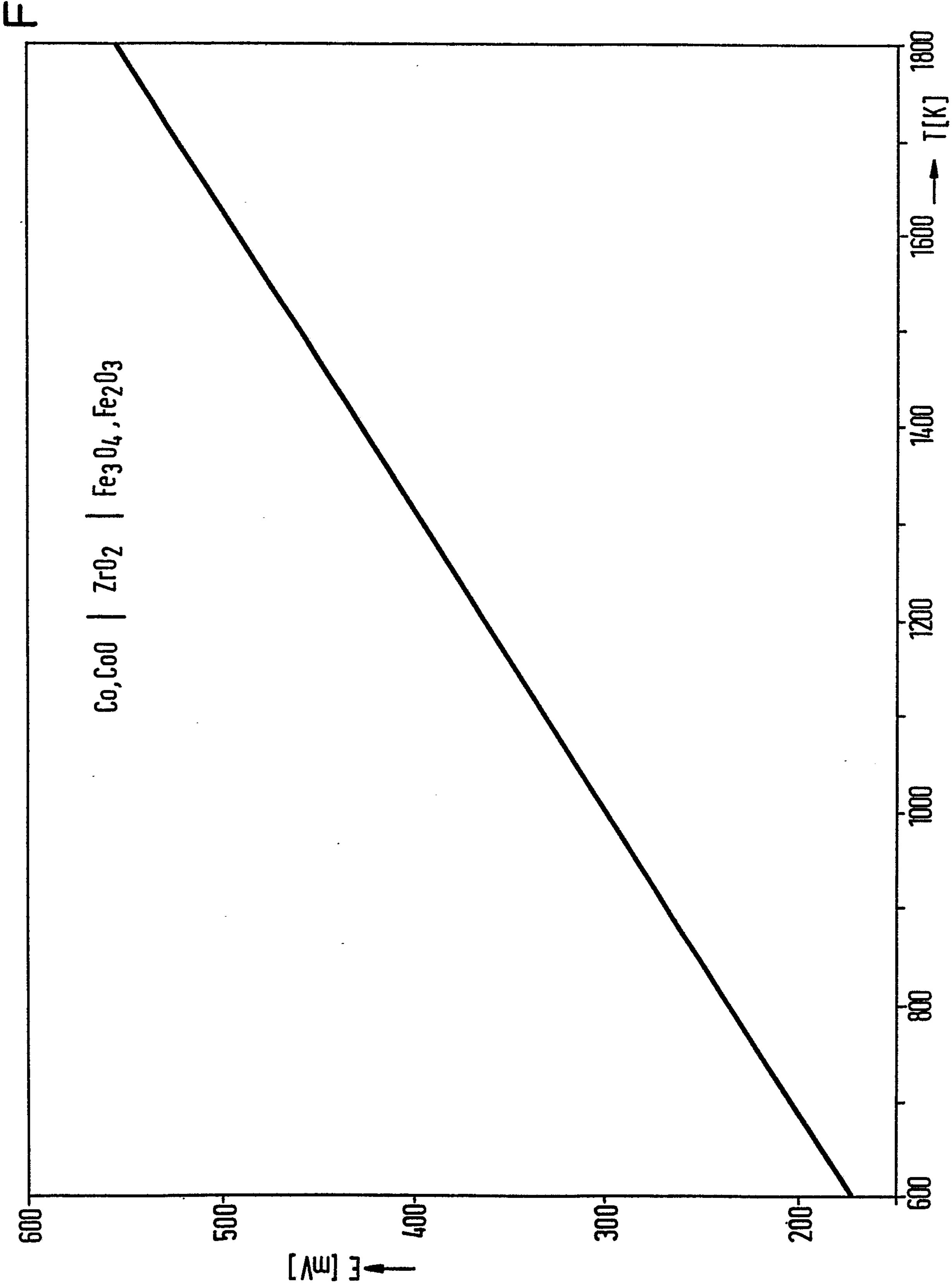

FIG. 9

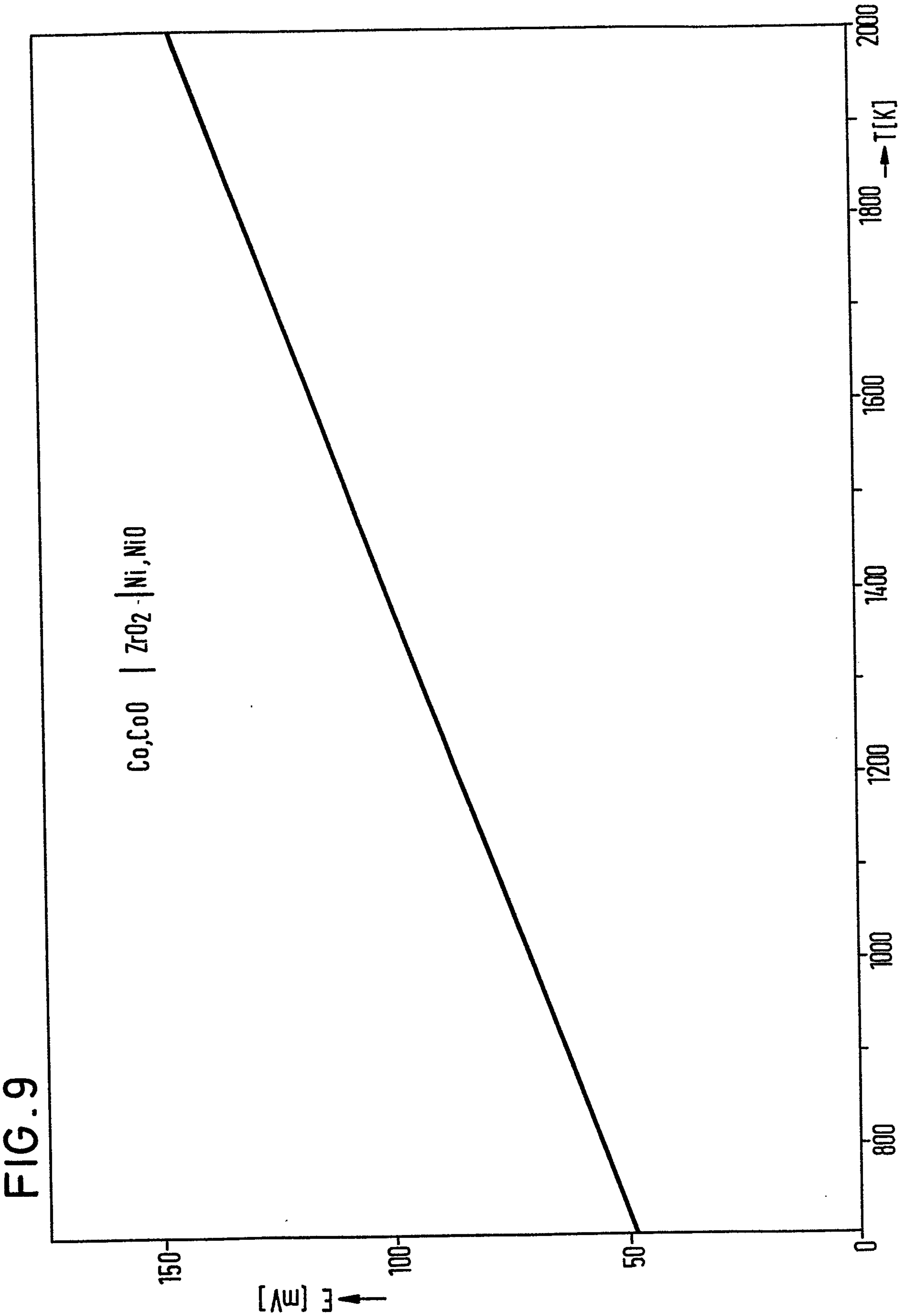
Co,CoO | ZrO2 | Ni,NiO
E [mV]
0
50
100
150
T [K]
800
1000
1200
1400
1600
1800
2000

FIG.10

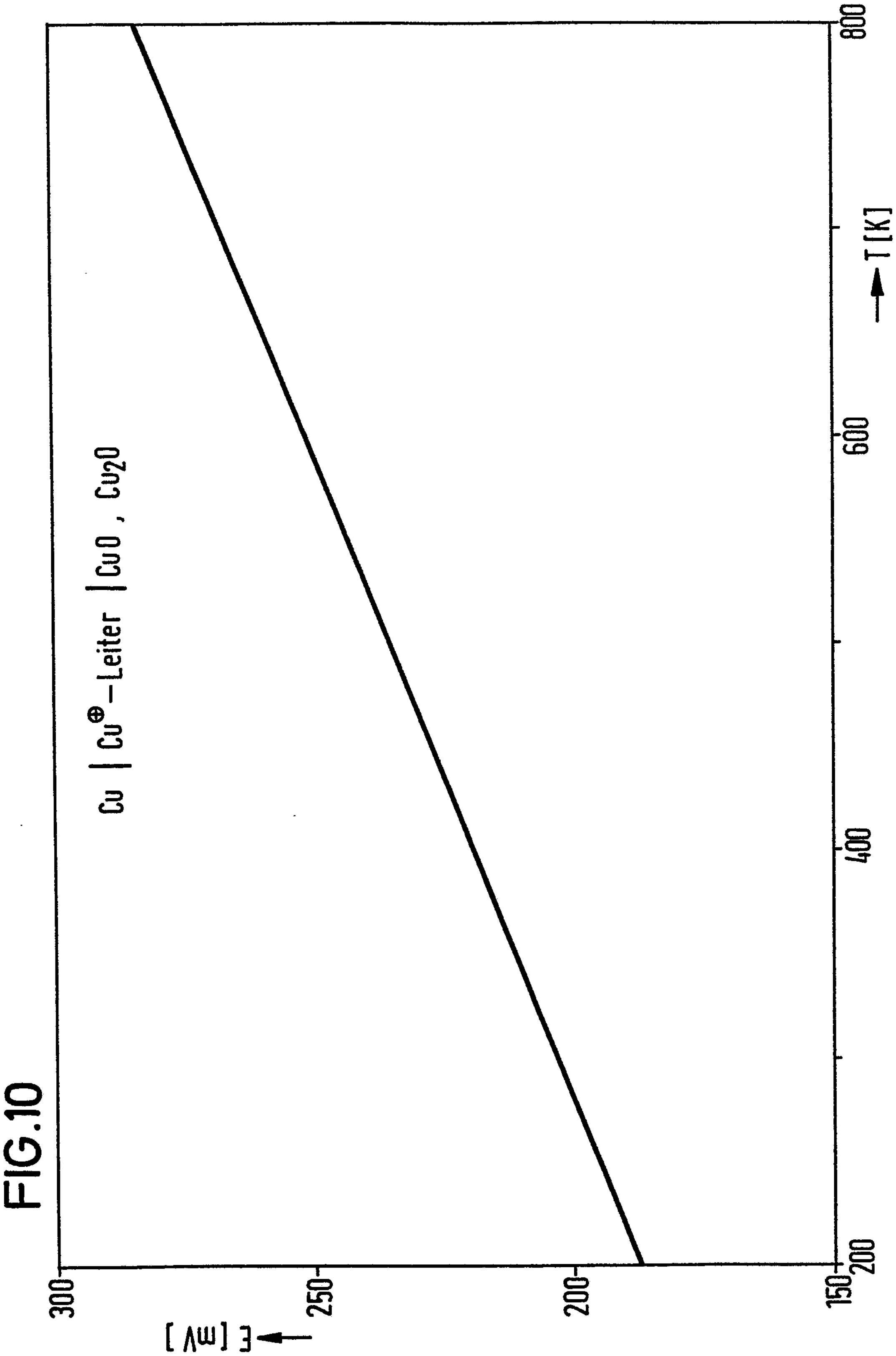

FIG.11

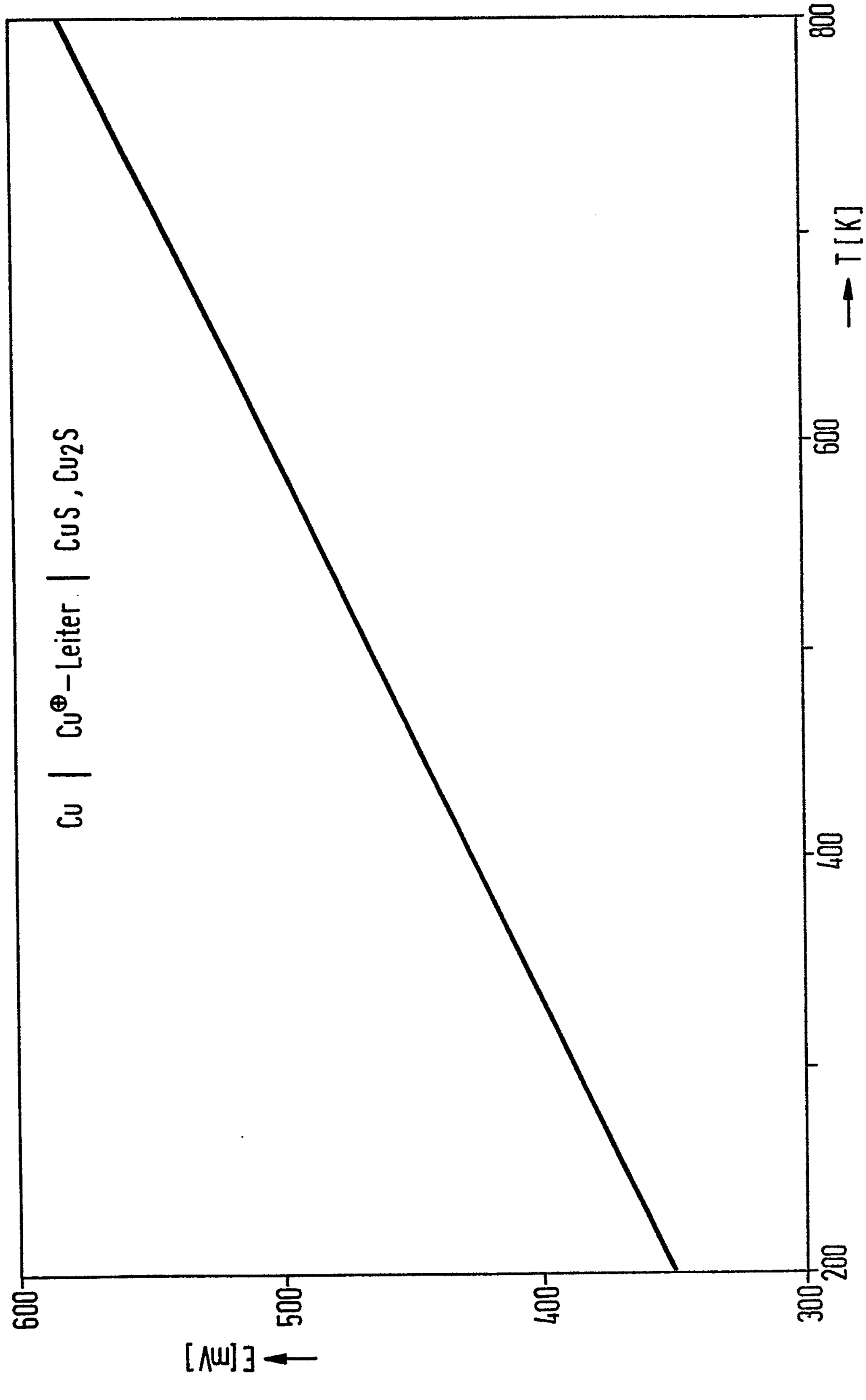
Cu | $Cu^{\oplus}$-Leiter | CuS , $Cu_2S$
E [mV]
600
500
400
300
T [K]
200
400
600
800

FIG. 12

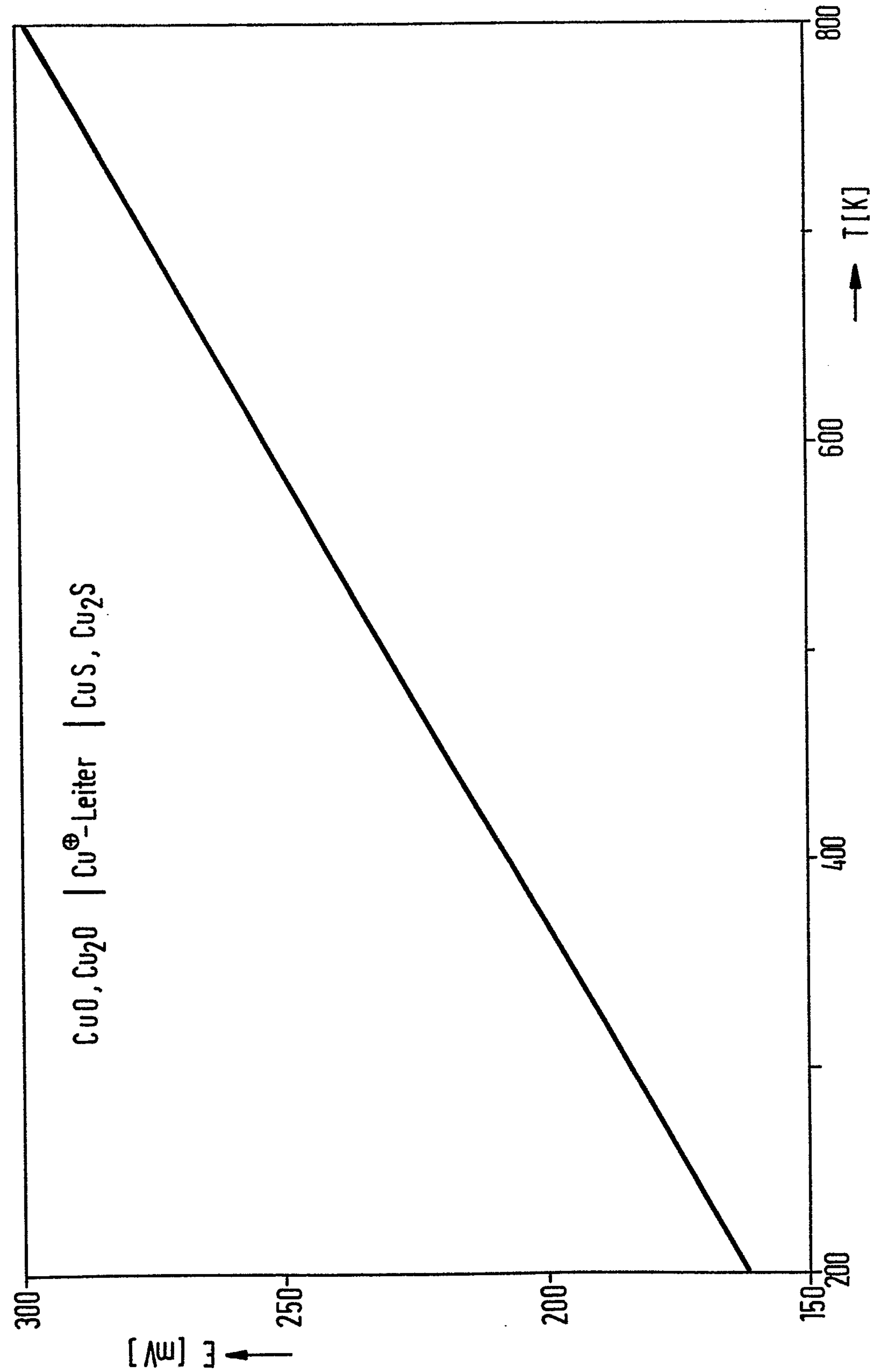
CuO, Cu2O | Cu⊕-Leiter | CuS, Cu2S
E [mV]
300
250
200
150
200
400
600
800
T [K]

FIG. 13

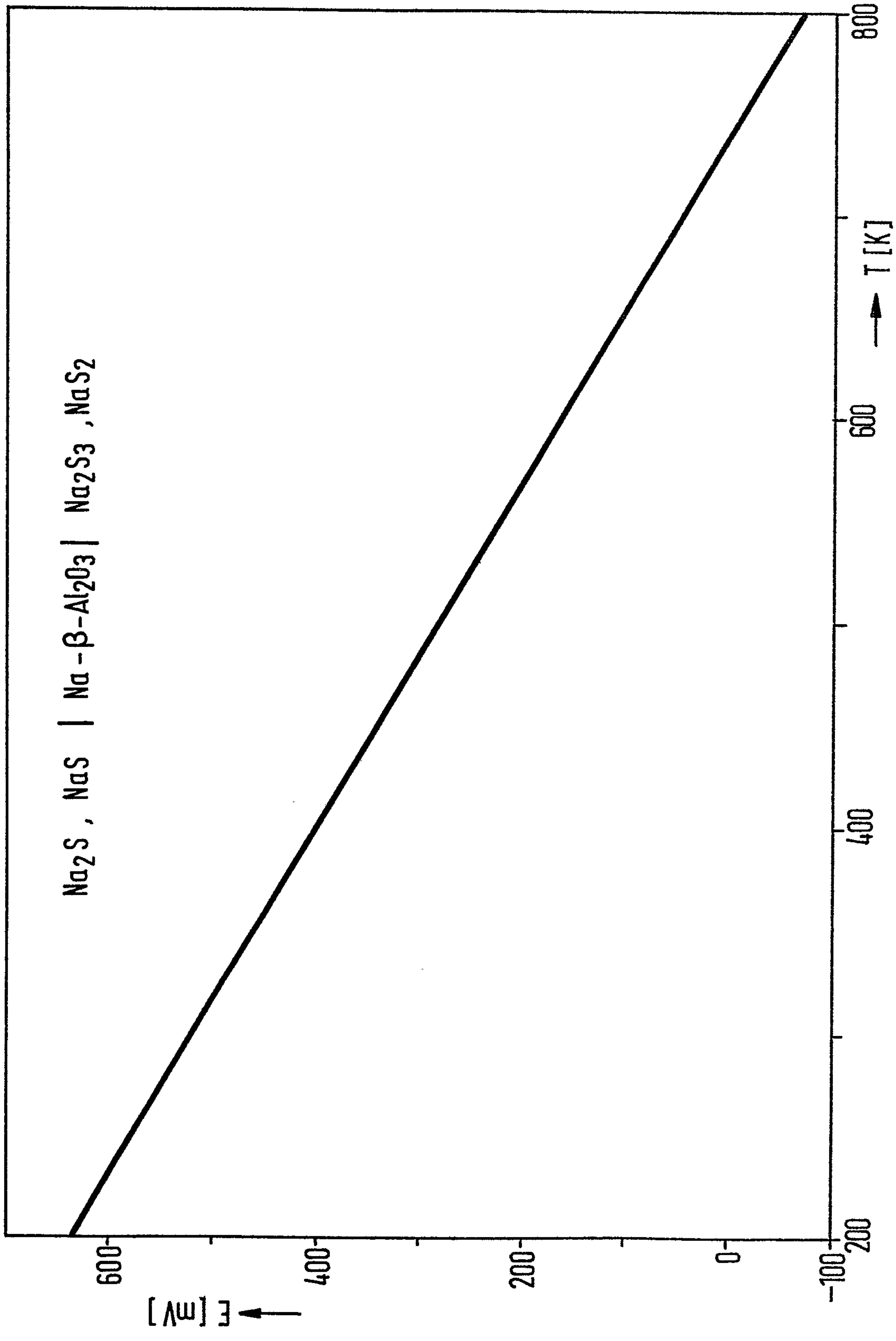
Na2S , NaS | Na-β-Al2O3 | Na2S3 , NaS2
T [K]
200
400
600
800
E [mV]
600
400
200
0
−100

FIG. 14